Europäisches Patentamt

European Patent Office

Office européen des brevets

(19)

(11) **EP 0 742 432 A1**

(12) # DEMANDE DE BREVET EUROPEEN

(43) Date de publication:
13.11.1996 Bulletin 1996/46

(51) Int. Cl.6: **G01N 21/90**

(21) Numéro de dépôt: 95420126.5

(22) Date de dépôt: **10.05.1995**

(84) Etats contractants désignés:
**AT BE CH DE DK ES FR GB IT LI NL**

(71) Demandeur: **VERRERIES SOUCHON NEUVESEL - VSN**
**F-69611 Villeurbanne Cedex (FR)**

(72) Inventeurs:
• **Zhang, Ruo Dan**
**FR-69100 Villeurbanne (FR)**

• **Vaschalde, Philippe**
**FR-69420 Condrieu (FR)**

(74) Mandataire: **Thibault, Jean-Marc**
**Cabinet Beau de Loménie**
**51, Avenue Jean Jaurès**
**B.P. 7073**
**69301 Lyon Cédex 07 (FR)**

(54) **Dispositif de contrôle optique de la qualité d'articles transparents ou translucides**

(57) L'invention concerne un dispositif de contrôle optique de la qualité d'articles capables de transmettre la lumière, le dispositif comportant :

- au moins une source lumineuse (4) dont l'intensité est modifiée par le passage des articles (2) entraînés en défilement,
- au moins un capteur optique (5) formé d'une barrette linéaire de mesure (7) formée de $n$ cellules photosensibles (8), destinée à recevoir la lumière transmise ou réfléchie par l'article et à être scrutée cycliquement, en vue de délivrer un signal représentatif de l'intensité lumineuse reçue par les cellules,

- un système optique (10) interposé entre la barrette (7) et l'article (2), sur le trajet de la lumière transmise par l'objet,
- et un circuit (9) d'analyse du signal issu des cellules, afin de déterminer la qualité des objets,

Selon l'invention, le système optique (10) est adapté pour permettre au capteur (5) de scruter l'objet (2) à l'aide d'une vision parallèle, en vue de déterminer la qualité des articles (2).

FIG.2

## Description

La présente invention concerne le domaine technique général du contrôle sans contact de la qualité d'articles ou d'objets éclairés par de la lumière.

L'invention trouve une application particulièrement avantageuse pour contrôler la qualité des articles capables de transmettre ou de réfléchir de la lumière, tels que des bouteilles et autres récipients analogues, réalisés en verre ou en matière plastique.

Dans le domaine préféré de la fabrication automatique d'articles en verre ou en matière plastique, il apparaît le besoin de contrôler leur qualité, afin d'éliminer les articles qui présentent des défauts susceptibles d'affecter leur caractère esthétique ou, plus grave, de présenter un réel danger pour l'utilisateur ultérieur.

Il est connu dans l'art antérieur de nombreuses solutions techniques pour contrôler sans contact la qualité de tels articles. Par exemple, le brevet EP 0 177 004 décrit un dispositif de contrôle pour des articles qui sont entraînés en défilement entre une source lumineuse et un capteur optique se présentant sous la forme d'une barrette linéaire de mesure. La barrette de mesure est orientée perpendiculairement au sens de défilement des articles et se trouve constituée par une série de cellules photosensibles. La lumière, dont l'intensité est modifiée par le passage des articles, traverse un objectif de focalisation, avant d'être reçue par les cellules photosensibles. Chacune des cellules de la barrette de mesure délivre un signal électrique proportionnel à la quantité de lumière qu'elle reçoit. Les cellules sont scrutées successivement et cycliquement, afin de former un signal vidéo.

Tout défaut dans la paroi inspectée modifie la quantité de lumière arrivant aux cellules correspondantes, ce qui se traduit, en sortie du capteur, par une variation du signal vidéo. D'une manière classique, le signal vidéo est traité par une unité qui analyse les caractéristiques des images, en vue de déterminer si l'article respecte les critères de qualité fixés.

Un dispositif de contrôle optique est destiné à déceler une première catégorie de défauts liés à la forme et aux dimensions de l'article, comme par exemple un défaut de hauteur, d'ovalisation ou de verticalité.

Les mesures optiques réalisées nécessitent, toutefois, l'utilisation de moyens précis pour le convoyage des objets, car un léger déplacement de ces derniers entraîne une erreur importante dans la mesure effectuée en raison de la modification de la longueur de trajet des rayons lumineux entre l'article et le capteur. Par ailleurs, la mise en oeuvre d'un système de convoyage précis ne permet pas de résoudre le problème posé, dans la mesure où les objets mesurés présentent, en général, un profil variable.

Un dispositif de contrôle optique doit être en mesure, également, de déceler une deuxième catégorie de défauts relatifs à l'existence d'inclusions dans le matériau, telles que des infondus de composition ou des grains réfractaires, des défauts d'aspects, comme par exemple des plis, des bulles, des loupes ou des salissures et des défauts verriers tels que des arrachées, des rivières ou des trapèzes.

Dans le domaine des bouteilles réalisées en matière plastique, il apparaît notamment un défaut relatif à l'inclusion de points noirs correspondant à de la matière calcinée. La détection de ce type de défaut est généralement difficile à mener à bien, dans la mesure où ces bouteilles comportent des anneaux de raidissement générant des zones d'ombres susceptibles de masquer les défauts réels.

Il apparait ainsi le besoin de disposer d'un dispositif capable de contrôler, par voie optique, la qualité d'articles transparents ou translucides présentant un profil variable quelconque et une distance variable par rapport au capteur de mesure.

L'objet de l'invention vise donc à satisfaire le besoin exprimé ci-dessus en offrant un dispositif permettant de détecter les défauts de forme et d'aspect sur des articles transparents ou translucides, indépendamment de la forme et du matériau constitutif de l'article, ainsi que de sa position par rapport au capteur de mesure.

Pour atteindre cet objectif, le dispositif de contrôle optique selon l'invention comporte :

- au moins une source lumineuse dont l'intensité est modifiée par le passage des articles entraînés en défilement,
- au moins un capteur optique formé d'une barrette linéaire de mesure formée de $n$ cellules photosensibles, destinée à recevoir la lumière transmise ou réfléchie par l'article et à être scrutée cycliquement en vue de délivrer un signal représentatif de l'intensité lumineuse reçue par les cellules,
- un système optique interposé entre la barrette et l'article, sur le trajet de la lumière transmise par l'article,
- et un circuit d'analyse du signal issu des cellules, afin de déterminer la qualité des articles.

Le dispositif selon l'invention est caractérisé en ce qu'il comporte un système optique adapté pour permettre au capteur de scruter l'objet à l'aide d'une vision parallèle, en vue de déterminer la qualité des articles.

Le dispositif selon l'invention permet d'obtenir une mesure précise, même pour une variation déterminée, selon l'axe optique de mesure, de la distance entre l'objet et le capteur optique.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue schématique de dessus d'une installation de convoyage d'articles, équipée d'un dispositif de contrôle optique selon l'invention.

La **fig. 2** est une vue de principe explicitant l'objet de l'invention.

La **fig. 3** est une vue en coupe transversale prise sensiblement selon les lignes III-III de la **fig. 1** et montrant un exemple de réalisation d'un dispositif selon l'invention.

La **fig. 4** est une vue de détail montrant une caractéristique du dispositif illustré à la **fig. 3**.

Les **fig. 5** et **6** sont des vues analogues à la **fig. 3** et montrant deux autres variantes de réalisation du dispositif selon l'invention.

La **fig. 7** est une vue schématique montrant une autre variante de réalisation d'un dispositif conforme à la **fig. 2**.

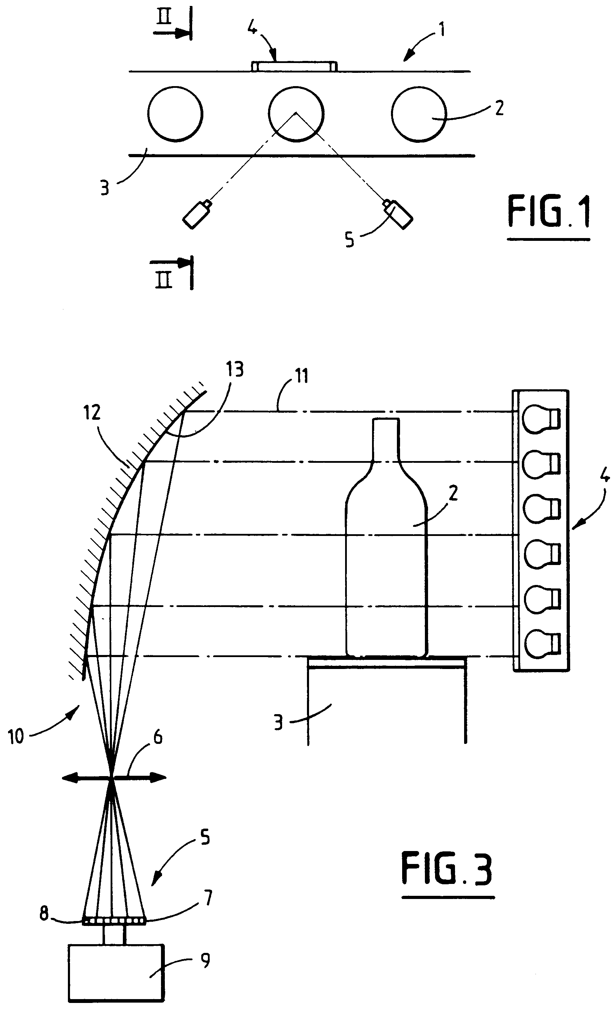

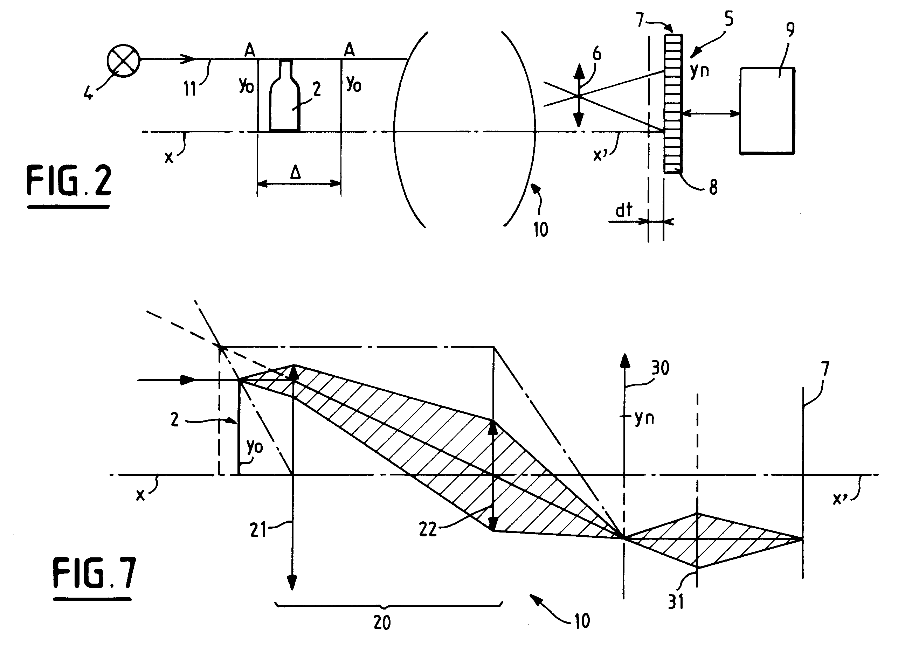

Tel que cela apparaît aux **fig. 1** et **2**, le dispositif **1** selon l'invention est destiné à assurer le contrôle optique de la qualité d'articles ou d'objets **2** transparents ou translucides, tels que des bouteilles et autres récipients analogues. Au cours de leur processus de fabrication, les articles **2** sont entraînés à l'aide d'un système de convoyage **3**, pour défiler devant le système de contrôle **1** selon l'invention.

Le système **1** comporte au moins une source lumineuse **4** et au moins un capteur optique **5** entre lesquels défilent les articles **2** à contrôler. La lumière transmise par l'article **2** et issue de la source **4** traverse un objectif **6** avant d'être reçue par le capteur optique **5**, tel qu'une caméra dite CCD. La caméra **5** est formée d'une barrette linéaire de mesure **7** composée d'une série de cellules photosensibles **8**. Par exemple, la barrette **7** est composée de 1024 cellules photosensibles **8** représentant une longueur totale **L** égale à 13,312 mm.

D'une manière classique, les cellules **8** sont scrutées successivement et cycliquement en vue de délivrer un signal vidéo représentatif de l'intensité lumineuse reçue par les cellules. Le signal vidéo délivré par les cellules **8** est transmis à une unité **9** d'analyse d'images permettant de déterminer si les articles inspectés respectent les critères de qualité fixés.

Conformément à l'invention, il est prévu d'interposer sur le trajet de la lumière transmise ou réfléchie par l'article **2**, un système optique **10** adapté pour conserver une mesure précise, même lorsque la distance varie entre l'objet **2** et le capteur **5**. Ainsi, lorsque l'objet **2** de hauteur $y_0$ se déplace d'une quantité $\pm \Delta$ le long de l'axe optique **x-x'**, son image dans le plan de réception du capteur **7** se déplace aussi de $\pm dt$. Le système optique **10** selon l'invention est donc adapté pour former une image $y_n$ de grandeur constante de l'objet **2** se déplaçant selon l'axe optique **x-x'** d'une quantité $\pm \Delta$, de manière que le grandissement $G = y_n/y_0$ reste constant dans un domaine image défini par l'équation $\pm dt = \pm \Delta G^2$.

En conséquence, lorsque l'objet **2** est affecté d'une erreur $dy_0$, son image est aussi entachée d'une erreur $dy_n$ telle que $dy_n/dy_0 = G$. Cette erreur est, bien entendu, décelable par le capteur optique **7**. Aussi, l'image de l'objet, reçue sur la barrette linéaire de mesure **8**, doit rester de hauteur constante, de manière qu'un défaut $dy_0$ s'inscrive dans un élément composant le capteur, tel qu'un pixel par exemple. Ainsi, pour un écart de distance $\Delta$ de l'objet, la mesure reste identique.

Ainsi, le système optique **10** est adapté pour produire ou ramener des rayons lumineux **11** parallèles entre-eux dans le plan de visée des cellules **8**. Le système optique **10** est donc conçu pour permettre au capteur **5** de scruter ou de voir l'objet **2** à l'aide d'une vision parallèle. Le système optique **10** fait en sorte que le capteur **5** observe l'objet à l'infini, de façon à obtenir une mesure précise, même pour une variation, dans une plage déterminée, de la distance selon l'axe optique, entre l'objet **2** et le capteur de mesure **7**.

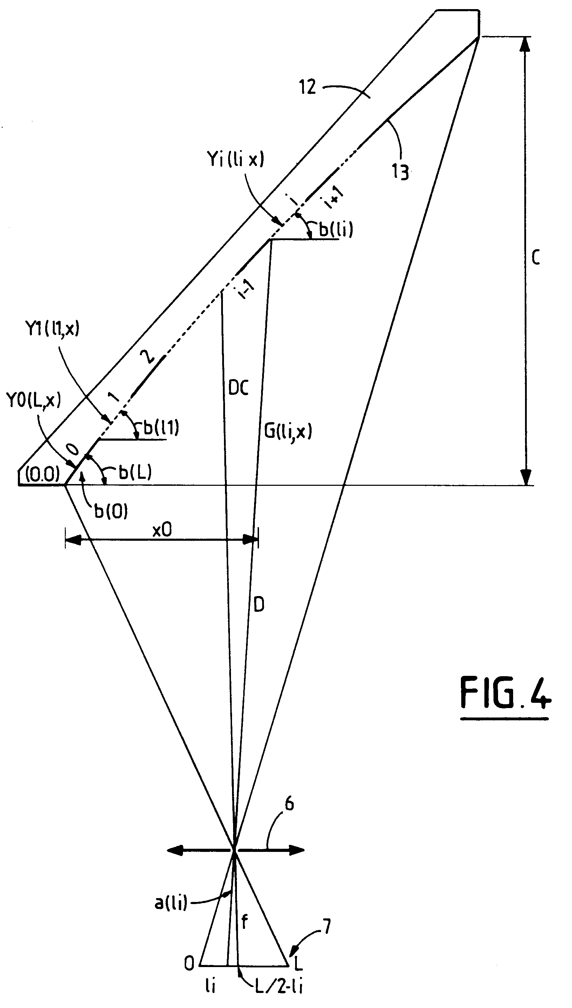

La **fig. 3** illustre un premier exemple de réalisation d'un système optique **10** constitué par un miroir **12** interposé entre l'article **2** et l'objectif **6**, et aligné de manière précise avec la barrette de mesure **7** qui est orientée selon une direction perpendiculaire au sens de défilement des articles et dans un plan sensiblement parallèle au plan de défilement des articles. Le miroir **12** présente une surface **13** de renvoi de la lumière, formée d'une série de **p** facettes élémentaires définissant des points de tangence assurant la transmission de la lumière pour des rayons lumineux **11** parallèles. L'article **2** se trouve ainsi inspecté à l'aide d'une vision parallèle, puisque le miroir **12** acquiert des rayons lumineux parallèles entre-eux.

Avantageusement, les rayons lumineux parallèles **11** produits ou acquis par le miroir **12** se trouvent parallèles avec le plan de défilement des objets, de manière que le capteur assure une observation de l'article **2** suivant différentes sections droites transversales, et selon au moins une partie et, de préférence, sur toute sa hauteur. Le plan de mesure est donc défini en fonction de l'orientation du miroir **12**.

Le dispositif selon l'invention permet ainsi d'obtenir un contour ou une silhouette de l'article **2**. Selon une variante préférée de réalisation, autorisant une appréciation du volume de l'article, il peut être envisagé de mettre en oeuvre, comme illustré à la **fig. 1**, deux caméras **5** qui font, entre leur axe optique, un angle de 90°. Une telle disposition permet la mesure des dimensions de l'article, à savoir les diamètres, les hauteurs et la verticalité de l'article. Il est à noter qu'il peut être prévu d'utiliser une troisième caméra **5** dont l'axe optique fait un angle de 45° avec les axes des deux autres caméras **5**, de manière à pouvoir apprécier les phénomènes d'ovalisation des articles **2**.

Un tel système optique rend ainsi la mesure des dimensions d'un article, par des faisceaux lumineux parallèles, indépendante de la distance de l'article par rapport au capteur de mesure. Un tel système est également insensible aux variations de profit que peut présenter l'article.

Un autre avantage de l'invention apparait dans le cas de la détection de défauts sur des articles comportant des stries ou des anneaux de raidissement. L'observation de tels articles, à l'aide de rayons lumineux parallèles entre-eux, entraîne la suppression des zones d'ombres apparaissant dans les techniques antérieures. Le système optique autorise ainsi un contrôle d'aspect des articles en reconnaissant des tâches ou des grains portés par l'article.

La **fig. 4** illustre un exemple de réalisation d'un miroir **12** apte à dévier les rayons divergents, de façon à les ramener parallèles dans le plan de visée du capteur optique. La surface de renvoi **13** est composée de facettes élémentaires référencées 0, 1, 2...i-1, i, i+1... Dans l'exemple illustré, les facettes sont continues, mais il peut être prévu qu'elles définissent le miroir de façon non continue. Le miroir **12** présente un profil courbe spécifique calculé à partir de la dimension **L** de la barrette de mesure **7**, de la focale **f** de l'objectif **6** et de la hauteur **C** du champ d'observation ou de scrutation de l'article.

Le miroir **12** est construit de manière que tous les rayons lumineux entre le miroir et l'article **2** sont parallèles entre-eux, selon une direction prédéterminée, par exemple horizontale. Il convient donc de calculer, en chaque point, l'angle que doit présenter le miroir, afin que le rayon associé à une cellule **8** donnée de la barrette **7** corresponde à un rayon horizontal entre le miroir et l'article **2**.

Les coordonnées **(x, y)** des points du miroir sont déterminées en choisissant un pas de calcul noté **s**. Il convient donc de déterminer la tangente au miroir pour une abscisse comprise entre **x** et **x + s**. Les angles définissant chaque tangente sont données par l'angle d'incidence b(l) sur le miroir, tel que $b(l) = (90-a(l))/2$ , avec $a(l) = arctg\ ((L/2 - 1)/f)$ .

On considère les tangentes $Y_0\ (L,x)$, $Y_1(l_1,x)$, ..., $Y_i(l_i,x)$, ...

On a :

$$Y_0(L,x) = tg(b(L))^*\, x,$$

avec : $0 < x < s$,

$$Y_1(l_1,x) = tg(b(l_1))^*\, (x\text{-}s) + Y_0(L,s),$$

avec : $s < x < 2s$.

On appelle G(li,x) la distance du point d'abscisse **x** appartenant à la tangente **i** à l'horizontale d'ordonnée 0, soit :

$$G(l_i,x) = (x\text{-}x_0)\, /\, tg\ (a(l)) = f^*(x\text{-}x_0)\, /\, (L/2 - l_i),$$

avec : $x_0 = (L\text{-}l_i)\ ^*\, D\, /\, f$ ,

d'où : $G(l_i,x) = f^*x - D^*(L\text{-}l_i)\, )\, /\, (L/2 - l_i)$ .

On a :

$$G\ (l_1,\, s) = Y_0\ (L,s).$$

On en déduit : $l_1 = (Y_0(L,s)^*L/2 + D^*L - f^*s)\, /\, (D + Y_0(L,s))$

D'une manière générale, si on connaît $Y_i(l_i,x)$,

avec : $i^*s < x < (i+1)^*s$ , on en déduit :

$$Y_{i+1}(l_{i+1},x) = tg(b(l_{i+1}))^*(x\text{-}(i+1)s) + Y_i(l_i,(i+1)s),$$

avec : $(i+1)s < x < (i+2)s$ ,

$$G(l_{i+1},\, (i+1)s) = Y_i(l_i,(i+1)s)$$

$$l_{i+1} = (Y_i(l_i,(i+1)s)^*\, L/2 + D^*L - f^*(i+1)^*s)\, /\, (Y_i(l_i,(i+1)s) + D).$$

La hauteur du champ estimé de scrutation CE est égale à $G(0,x) = 2^*\, (f^*x\text{-}D^*L)\, /\, L$  et à $H(x) = tg(b(0))^*x$ , d'où :

$$x = 2^*D^*L/(2^*f\text{-}tg(b(0))^*L),$$

$$CE = 2^*tg(b(0))^*\, D^*L/(2^*f\text{-}tg(b(0))^*L).$$

Le champ réel est supérieur à ce champ estimé. Connaissant CE, on peut en déduire la distance D de l'objectif au miroir, soit :

$$D=CE^*(2^*f - tg(b(0))^*L)\, /2^*L^*tg(b(0)).$$

Les coordonnées des points du miroir sont calculées pour :

- largeur cellule = 13 $\mu$m,
- nombre de cellules sur la barrette = 1 024,
- pas de calcul = 0,42 mm,
- champ estimé = 265 mm (car CE < CR),
- distance focale = 25 mm.

On calcule tout d'abord la distance D, le champ estimé étant fixé à 265 mm. On a :

$$D = CE^* (2^*f\text{-}tg(b(0))^* L) / (2^*L^*tg(b(0))),$$

avec : $L = 1024^* \, 13.10^{-3} = 13.312$ mm,

$$a(0) = arctg (L/2 - 0) / f) = 14,9°,$$

$$b(0) = (90 - a(0) ) /2 = 37,55°,$$

soit : $\underline{D = 514,9 \text{ mm}}$.

On considère l'origine (0,0) sur le bas du miroir.

Le point suivant est le point $(x_0, y_0)$. On a $\mathbf{x_0 = 0,42 \text{ mm}}$, le pas de calcul.

D'après les calculs effectués précédemment on a :

$$y_0 = tg \, (b(L)^* \, x_0,$$

avec : $b(L) = (90 - arctg (L/2 - L) / f))/2 = 52,45°$ ,

d'où : $y_0 = 0,546$ mm.

Le point suivant a pour coordonnées $(x_1, y_1)$ avec :

$$x_1 = 0,84 \text{ mm (2 fois le pas)},$$

$$y_1 = tg(b(l_1)) \, ^* \, (x_1\text{-}s) + y_0,$$

avec : $l_1 = (y_0^*L/2 + D^*L - f^*s) / (D + y_0) = 13,2845$ ,

d'où : $y_1 = 1,092$ mm.

Il est ainsi continué pour les différents points du miroir.

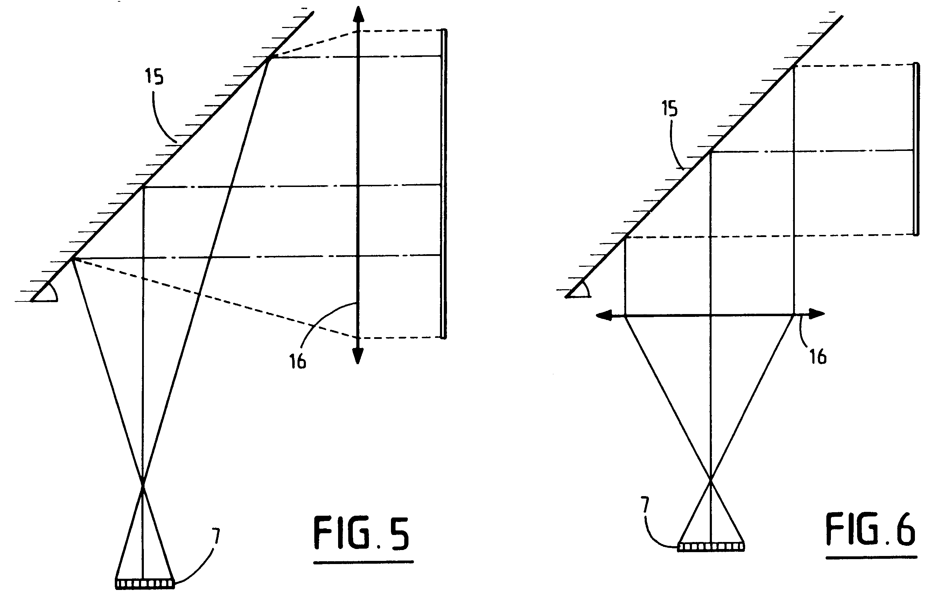

Les **fig. 5** et **6** illustrent deux autres variantes de réalisation du système optique **10** selon l'invention pour produire, dans le plan de visée, des rayons parallèles de scrutation de l'objet. Le système optique est constitué par un miroir plan **15** qui se trouve associé à une lentille asphérique **16** interposée entre le miroir **15** et l'article **2** (**fig. 5**) ou entre le miroir **15** et la barrette de mesure **7** (**fig. 6**).

La **fig. 7** illustre une autre variante de réalisation d'un système optique **10** formé par un ensemble optique afocal **20** suivi d'une lentille collectrice convergente **30**. L'ensemble optique afocal **20** comporte, par exemple, en tant qu'élément frontal, une lentille de Fresnel **21** et, en tant qu'élément arrière, une lentille **22** divergente ou convergente, dont le centre optique est sensiblement confondu avec le foyer image de la lentille de Fresnel **21**. La lentille **22** est définie de sorte que le rapport des focales $\mathbf{L_1}$, $\mathbf{L_2}$, respectivement des lentilles **21**, **22**, respecte l'inégalité suivante : $F_2/F_1 < 0,1$. La lentille de Fresnel **21**, la lentille **22** et la lentille collectrice convergente **30** sont montées de manière coaxiale le long de l'axe optique **x-x'**.

La lentille collectrice convergente **30** est placée de façon que son foyer objet se trouve sensiblement confondu avec l'axe optique de la lentille arrière **22**. L'intervalle, séparant la lentille **22** et la lentille collectrice **30**, est au voisinage de la focale de la lentille collectrice **30**. La lentille convergente **30**, dont le rôle est attaché à la lentille **22**, permet de collecter les faisceaux et de régler l'image finale.

La lentille collectrice convergente **30** est suivie, selon le trajet optique, par une lentille convergente **31** adaptée pour donner à l'image la grandeur voulue sur le capteur optique **7** dont les éléments constitutifs permettent de définir la valeur du grandissement **G** en fonction de la tolérance $dy_0$ souhaitée. La coaxialité de la lentille **31** avec les éléments **21**, **22** et **30** n'est pas obligatoire et dépend, soit des contraintes de construction, soit des nécessités de correction des aberrations optiques.

L'invention n'est pas limitée aux exemples décrits et représentés, car diverses modifications peuvent y être apportées sans sortir de son cadre.

**Revendications**

1. Dispositif de contrôle optique de la qualité d'articles capables de transmettre la lumière, le dispositif comportant :

   - au moins une source lumineuse (**4**) dont l'intensité est modifiée par le passage des articles (**2**) entraînés en défilement,
   - au moins un capteur optique (**5**) formé d'une barrette linéaire de mesure (**7**) formée de <u>n</u> cellules photosensibles (**8**), destinée à recevoir la lumière transmise ou réfléchie par l'article et à être scrutée cycliquement en vue de délivrer un signal représentatif de l'intensité lumineuse reçue par les cellules,
   - un système optique (**10**) interposé entre la barrette (**7**) et l'article (**2**), sur le trajet de la lumière transmise par l'objet,
   - et un circuit (**9**) d'analyse du signal issu des cellules, afin de déterminer la qualité des objets,

      caractérisé en ce que le système optique (**10**) est adapté pour permettre au capteur (**5**) de scruter l'objet (**2**) à l'aide d'une vision parallèle, en vue de déterminer la qualité des articles (**2**).

2. Dispositif selon la revendication 1, caractérisé en ce que le système optique (**10**) est disposé de manière que le capteur (**5**) scrute l'objet (**2**) selon une vision parallèle avec le plan de défilement des articles (**2**), en vue d'inspecter ces derniers selon des sections droites transversales.

3. Dispositif selon la revendication 1 ou 2, caractérisé en ce que le système optique (**10**) est constitué par un miroir (**12**) destiné à recevoir la lumière transmise par l'objet et interposé entre l'article (**2**) et la barrette de mesure (**7**).

4. Dispositif selon la revendication 3, caractérisé en ce que le miroir (**12**) comporte **p** facettes élémentaires d'acquisition de rayons lumineux parallèles (**11**).

5. Dispositif selon la revendication 3 ou 4, caractérisé en ce que le miroir (**12**) est aligné avec la barrette de mesure (**7**).

6. Dispositif selon la revendication 1 ou 2, caractérisé en ce que le système optique (**10**) est formé par un miroir plan (**15**) qui se trouve associé à une lentille asphérique (**16**) interposée entre le miroir (**15**) et l'article (**2**) ou entre le miroir (**15**) et la barrette de mesure (**7**).

7. Dispositif selon la revendication 1 ou 2, caractérisé en ce que le système optique (**10**) est formé par un ensemble optique afocal suivi d'une lentille collectrice convergente.

8. Dispositif selon la revendication 7, caractérisé en ce que l'ensemble optique afocal comporte, en tant qu'élément frontal, une lentille de Fresnel et, en tant qu'élément arrière, une lentille convergente ou divergente dont le centre optique est sensiblement confondu avec le foyer image de la lentille de Fresnel.

9. Dispositif selon la revendication 7, caractérisé en ce que la lentille collectrice convergente est placée de façon que son foyer objet se trouve sensiblement confondu avec le centre optique de la lentille arrière, en vue de permettre de régler l'image finale sur le capteur optique, une telle lentille convergente étant placée entre la lentille collectrice et le capteur pour donner à l'image la grandeur voulue sur le capteur optique.

10. Application du dispositif selon la revendication 1, au contrôle de l'aspect d'articles transparents ou translucides.

11. Application du dispositif selon la revendication 1, au contrôle dimensionnel d'articles transparents ou translucides.

FIG.1

FIG.3

EP 0 742 432 A1

FIG.2

FIG.7

FIG.4

FIG.5

FIG.6

EP 0 742 432 A1

Office européen
des brevets

**RAPPORT DE RECHERCHE EUROPEENNE**

Numero de la demande

EP 95 42 0126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | EP-A-0 177 004 (VERRERIE DU LANGUEDOC) * revendication 1; figure 1 * | 1 | G01N21/90 |
| A | WO-A-92 14142 (NOVO NORDISK) * page 18, ligne 26 - page 19, ligne 10; figures 7,8 * | 1 | |
| A | US-A-3 027 798 (MATHIAS) * colonne 2, ligne 42 - colonne 4, ligne 5; figures 3,4 * | 1,3,5 | |
| E | EP-A-0 653 627 (ELPATRONIC AG) 17 Mai 1995 * colonne 3, ligne 20 - colonne 4, ligne 34; figure 4 * | 1 | |
| E | FR-A-2 712 089 (SOUCHON NEUVESEL VERRERIES) 12 Mai 1995 * revendications * | 1-6,10, 11 | |

DOMAINES TECHNIQUES RECHERCHES (Int.Cl.6)

G01N

Le présent rapport a été établi pour toutes les revendications

| Lieu de la recherche | Date d'achèvement de la recherche | Examinateur |
|---|---|---|
| LA HAYE | 10 Octobre 1995 | Krametz, E |